# EUROPEAN PATENT SPECIFICATION

(11) **EP 2 331 875 B1**
(45) Date of publication and mention of the grant of the patent: **25.01.2012**
(21) Application number: 09776278.5
(22) Date of filing: 07.09.2009
(51) Int. Cl.: F23J 15/04, F23J 15/06, B01D 47/06, B01D 53/78

(54) **METHOD AND SYSTEM FOR COOLING HOT GASES BY WATER INJECTION**
VERFAHREN UND SYSTEM ZUM KÜHLEN VON HEISSEN GASEN DURCH WASSEREINSPRITZUNG
PROCÉDÉ ET SYSTÈME DE REFROIDISSEMENT DE GAZ CHAUDS PAR INJECTION D EAU

(30) Priority: 07.09.2008 DK 200801253
(43) Date of publication of application: 15.06.2011
(73) Proprietor: Dall Energy Holding ApS, 3460 Birkerød (DK)
(72) Inventor: BENTZEN, Jens Dall, DK-3460 Birkerød (DK)
(74) Representative: Plougmann & Vingtoft A/S
(86) International application number: PCT/DK2009/050228
(87) International publication number: WO 2010/025739

(56) References cited:
- WO-A-2007/036236
- BE-A- 490 086
- DE-C1- 10 058 548
- GB-A- 1 184 389
- JP-A- 57 169 512
- JP-A- 2004 061 024
- US-A1- 2006 086 253

## Description

The invention relates inter alia to a method and a system for cooling and cleaning a hot gas, e.g. flue gas, produced in a thermal reactor, or - more precisely - using water injection to cool gases, released by thermal conversion (gasification or combustion) of fuels e.g. biomass, waste, coal, oils, gases or mixtures of these by evaporating part of or all the injected water.

Furthermore, the invention can be applied for cooling and cleaning hot gases, released from industrial plants; like cement kilns, refineries, metals works, etc.

### BACKGROUND OF THE INVENTION

Hot gases are cooled and cleaned for environmental purposes as particulates and other pollutants, such as sulphurs, chlorides etc. hereby can be removed before the gas is let into the atmosphere. Hot gases are also cooled and cleaned in energy plants where the energy of the gas is transferred to a media that heated, for instance water, steam or oil.

Reference is made to Perry Chemical Engineer's Handbook, 7. Edition, especially pp. 17, 39 - 40*,* WO 2007/036236 A1 and Autojet Spraying Systems, Bulletin 540, rev. 1, 2004*.*

Further reference is made to:
JP 2004061024, which describe a gas cooling tower where the warm gas inters a narrow top of the cooling tower, with a diameter of 0,05-0,25 in respect of the internal diameter (D) of the tower main housing. The tower main housing is equipped with the cooling unit to cool the gas supplied from the gas supply duct.
EP 1 325 773 A1 which describe a flue gas cooling apparatus, which cool the flue gas and collect the dust in a single apparatus
JP 09-178367, which describe a gas cooler where the gas is turning and go upwards.
US 2006/086253 A1 describes a cyclone separator cooler separating particles from an injected mixture of gas and particulate matter. The inside of the cyclone separator is provided with a flow of liquid. An inside wall of the cyclone separator is at least partially coated with the flowing liquid. Particulate solids in the injected gas and solids mixture are moved to the wall of the cyclone separator by centrifugal force and are removed along with the flow of liquid. The liquid facilitates separation and removal of the particles and also cools the cyclone separator and the gas mixture flowing through it.
BE 490 086 A discloses a gas treatment method which uses a tower having a given height/diameter ratio. The method disclosed is using ammonia as washing agent and not for cooling. In addition, the BE 490 086 does not disclose full evaporation.
WO 2007/036236 A1, which describe that heat can be recovered from hot gas produced in a thermal reactor , by injecting water into the gas at one or more injection zones in such an amount and in such a way that the gas temperature due to water evaporation is reduced to below 400° C.

Often cooling is considered in relation to two types of cooling, namely "shell and tube heat exchangers" and "evaporative cooling" and the such two types of cooling will be discussed briefly in the following.

### Shell and Tube Heat Exchangers:

It is well known, that hot gases can be cooled from high temperatures (400 - 1000°C) to lower temperatures (100 - 400°C) by using shell and tube heat exchangers carrying the hot gas inside tubes, which are in external contact with a cooling medium (water, air, thermal oil, etc.). Such installations are typically built in sizes ranging from a hundred (kg/h) hot gases up to capacities of several 100 thousands (kg/h).

### Evaporative Cooling:

It is also well known, that the aforementioned hot gases can be cooled by utilising the heat of evaporation from water, injected into the gas for cooling.
There are several advantages of such cooling method, for instance:
- It is more simple and cost effective than shell-and tube heat exchangers
- The water vapour content of the gas increase which result in several advantages for instance: a following condensation unit can produce more energy at higher temperatures than normal condensation units (ref: WO 2007/036236 A1) and electrostatic precipitators have a better particle separation.
- Cooling and gas cleaning can be integrated in one unit as gas cleaning agents such as lime, activated carbon etc can be injected into the gas cooling system.

Two main principles can be used:
A. An excess amount of water injection to produce cooled gas, containing residual water droplets (ref: *Perry above*)
   1. By using a scrubber column, which may be oriented horizontally, obliquely or vertically and where the water spray is injected counter current, cross current or co-current with the hot gas
   2. By using a vertical column, where the gas is conducted in a rotating/axial direction and subject to a radial water spray from the centre
   3. A water ejector, where the gas is moved through the equipment by a co-current jet of water

   Such installations are typically built in sizes ranging from a few hundred (kg/h) hot gases up to capacities of several 100 thousands (kg/h).
B. A reduced amount of water injection to produce a cooled dry gas (ref: *Autojet above*)
   The main advantage of this system is that dry gas cleaning systems (e.g. cyclones, bag filters and electrostatic filers) can be applied after the cooler.

Other advantages of dry evaporative cooling are:
- A wide range of materials can be used for the cooling reactor, including low cost steels
- Contaminants such as sulphurs, chlorides, dioxins etc. can be removed form the gas by injection of gas cleaning agents followed by removal of solids.

Typically a dry evaporative cooler is built as a vertical tower.

The inlet of the gas into the cooling tower can be tangentially to the cooling reactor (ref: JP 2004061024) which will create a swirl in the cooler or the gas flow can be directed so it become as close to plug flow as possible in the cooling section.

When the gas reaches the cooling section, water is sprayed into the gas through one or several nozzles placed in a lance that is mounted to the cooler and spraying into the gas. The water nozzles are oriented in a fashion, which avoids wetting of the walls.

The water droplets are atomised preferable to droplets, having Sauter diameter less than 100 µm. Pressurized air can be used as atomizing agent.
During the cooling section the water droplets are evaporated completely and the gas leave the exit of the cooling tower in a dry state. Also, the avoidance of wetting the walls will prevent evaporation of drops at the walls and possible deposition of harmful salts absorbed in the water drops.

Typically such dry evaporative coolers cool gases from 400C-1200C to 100-400C Such installations are typically built for large gas capacities up to several million (kg/h).

### Application of the known technologies

It is well known, that in the case of an cement, waste or energy plant, where the gas is released from thermal reactions with biomass, waste or coal, the raw gas will contain alkali metal salt vapours, which during a normal dry cooling system (shell and tube heat exchanger) will condense and cause heavy fouling and corrosion, and it is well known, that this will often result in component failure by general fouling of gas passages and nozzles and high maintenance costs replacing corroded sections. Typically alkali salts in this connection are chlorides of potassium and sulphates of potassium and calcium.

It is also well known, that similar problems occurs with other (chemical plant) processes mentioned previously.

It is well known, that technologies based on heat exchangers - because of the many narrow gas passages - have inherent tendency for fouling, and are generally avoided, when the gas to be cooled is heavily contaminated with tars, salts and particles. The same problems are observed in the technologies of evaporative cooling, described above under paragraph A.

It is also well known, that the fouling and corrosion problems are generally avoided by the use of the technologies of evaporative cooling, described above under paragraph B.

However, these cooling systems will have a typical ratio of length/diameter for the vertical tower in excess of 5 and often a height of 20 - 30 m, which is considered inappropriate for smaller plants - e.g. district heating and gasification plants, where building legislation very often limits the height to typically below 10 m.

The reason for the large height in standard coolers is that the system consists of three sections: inlet, drying and outlet that each represents a considerable building height.

Inlet section: In the inlet zone the gas shall develop a flow profile, which takes several diameters. Often it is also needed to make a diameter expansion until the dryer diameter is reached. This inlet section can be as high as 10 m long or even more.

Dryer section: The length of the dryer section depend on inlet and outlet temperatures, flow profile and on the droplet size of the water e.g. a 100 µm droplet at temperature difference between gas and droplet of about 250°C needs about 0.3 (s) to evaporate, while 500 µm drops needs about 7.0 (s) for complete evaporation. Typically the dryer section is more than 5 m long.

Outlet section: The outlet section is followed by the dryer section. To avoid disturbance of the flow profile in the dryer the outlet duct is placed well after the drying section. Normally the outlet section is more than 3 meters.
Therefore, for cleaning problematic hot gases - especially for smaller plants, but also for very large plants with capacities of more than 1 million (kg/h) gas - there is a need for a technology, which is considerably more compact.

### DESCRIPTION OF THE INVENTION

In a first aspect of the invention, a method is provided. The method is for cooling hot gasses produced in a thermal reactor, and the method comprising
- leading of the hot gas into a cylindrical evaporative cooler in one or more tangential gas channels inlets with such a velocity that to carry out a rotary movement in the cylindrical evaporative cooler
- injection of water in the hot gas at one or more injection zones in such an amount and droplet sizes that the water droplets will fully evaporate inside the evaporative cooler.

Typically and preferably, the gas evaporative cooler has a height/diameter (similarly: length/width) ratio less than 5 m. The height and diameter of the evaporative cooler are preferably defined relatively to an in situ arrangement of the evaporative cooler: height being the internal vertical length of the evaporative cooler and diameter being the internal horizontal diameter of the evaporative cooler. Accordingly, the cylindrical evaporative cooler may be given some kind of box-shaped packing.

In addition, the injection of water may preferably be provided by at least one nozzle arranged on the top of the evaporative cooler.

In a second aspect of the invention, a system for cooling hot gasses is provided. The system for cooling hot gasses comprises:
- an inlet duct for the hot gas, placed tangentially on
- a vertically arranged cylindrical evaporative cooler with at least one water injection device, e.g. in the form of nozzles, for injection of water into the gas preferably on top of the evaporative cooler, and
- an outlet duct.

In a third aspect a plant is provided, the plant utilises the system according to the second aspect of the invention and the method according to the first aspect of the invention.

Accordingly, the invention provides inter alia a method, a system and a plant for cooling hot gases in a compact dry evaporative cooler, as the gas enters a cylindrical drying reactor tangentially. Furthermore, only one or at least only a few water injection nozzles may be needed for spraying water, said nozzles being preferably arranged on the top of the evaporative cooler and spray down into the gas to be cooled, which considerably simplifies the equipment. As indicated, the evaporative cooler is compact typically considered in the sense that the height/diameter ration is below 5.

Further aspects and embodiments of the invention are presented in the accompanying claims. In the following the invention and in particular preferred embodiments thereof are presented with reference to the accompanying drawings in which:
Figure 1 schematically shows the first design of the system, according to the invention, where fuel is burned or gasified in a thermal reactor and where the hot gas released from the reactor is cooled,
Figure 2 shows a typical design for the evaporative cooler used in the system,
Figure 3 shows a typical design for the evaporative cooler used in the system including the anticipated flow pattern inside the cooler,
Figure 3a show another typical design for the evaporative cooler used in the system including the anticipated flow pattern inside the cooler,
Figure 4 shows a typical design for the evaporative cooler used in the system including the anticipated total pressure in the central plane of the evaporative cooler,
Figure 5 shows the invention applied to an energy plant, based on solid fuel combustion and use of the cooled gas for production of district heating,
Figure 6 shows the invention applied to an energy plant, based on solid fuel gasification and use of the cooled gas in a gas engine,

### DETAILED DESCRIPTION OF PREFFERED EMBODIMENTS

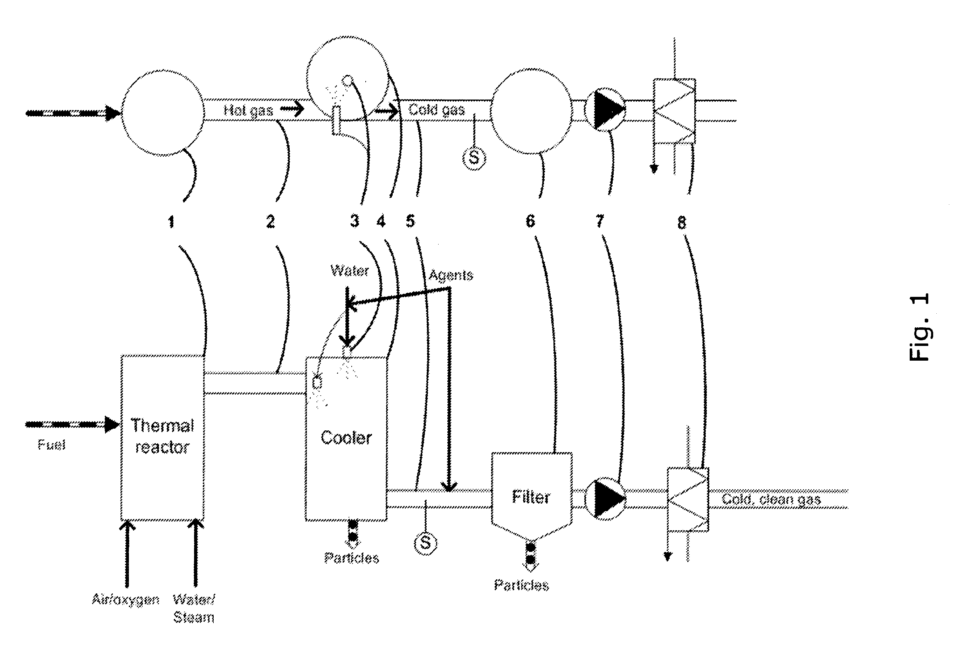

In Figure 1, 1 reference a thermal reactor, which is supplied with fuel, air or oxygen and water and/or steam. Item 2 is a channel for transporting the hot gases from the thermal reactor to the evaporative cooler 4.

The evaporative cooler is oriented vertically. Item 3 is one or more water inlet nozzle (s). The nozzle(s) can use air/gas assisted atomisation.

Some particles (dust and condensed alkali salts) can be separated in the evaporative cooler and can be removed from the bottom, and the evaporative cooler exit channel 5 conducts the dry, cooled and relatively clean gas to a residual particle filter - which may be a scrubber, a bag house filter, a cyclone or an electrostatic precipitator etc. A fan 7 handles the pressure drop throughout the system.

A sensor S placed downstream the evaporative cooler 4 measures temperature and/or the humidity of the gas exiting the evaporative cooler 4. The measurement of the temperature and/or the humidity is used by a water injection system that controls the amount of water being injected into to the evaporative cooler 4 so that the temperature and/or the humidity of the gas exiting the evaporative cooler 4 is within pre-selected limits.
Due to the water injection the gas is now very suitable to cool and condensate in a condensation unit 8.

Agents, for instance lime and/or activated carbon can be sprayed into the hot gas and/or the cooled gas in order to adsorb contaminants such as acids and dioxins etc.

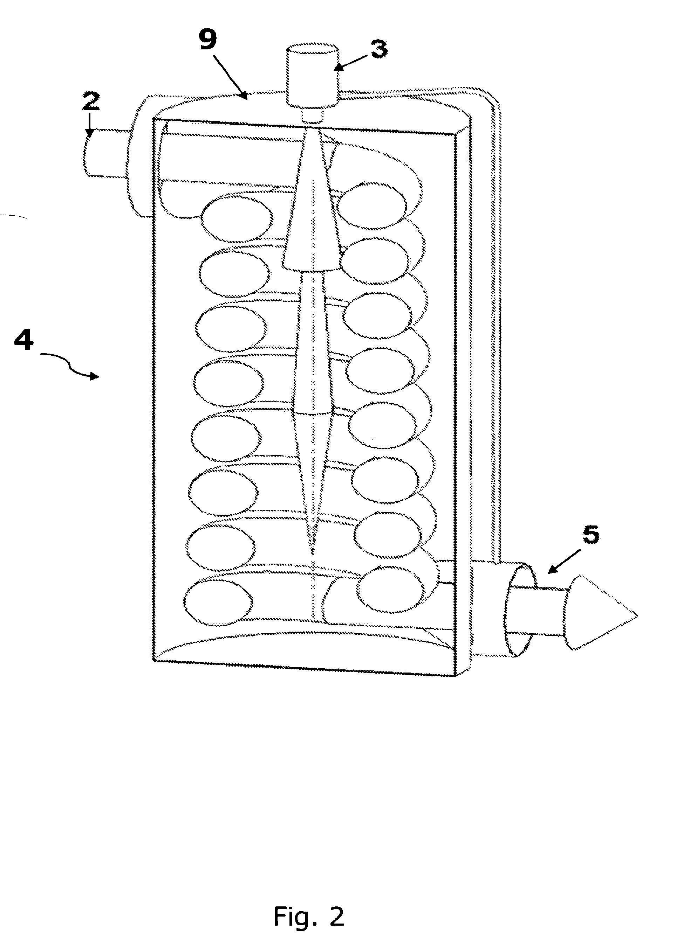

In Figure 2, 2 is the inlet channel of the evaporative cooler for the hot gases from the reactor. The gas enters at a sufficient high velocity to ensure that it will move in a helical motion along the wall of the evaporative cooler. Therefore, the angular velocity of the gas close to the wall is considerably larger than the axial velocity through the evaporative cooler and the gas will carry out 6 - 12 revolutions, before reaching the tangential exit channel 5. It should be pointed out that the coil-like structure shown in fig. 2 is not intended to show a tube, but illustrates that the fluid inside the evaporative cooler flows in a helical motion occupying the interior of the evaporative cooler 4.

At the centre of the evaporative cooler end cover 9 (or arranged symmetrically around the centre) one or more nozzles 3 are located, through which water droplets are sprayed along the evaporative cooler axis preferably having Sauter diameters below 100 µm with a total amount adjusted by a valve at the nozzle(s) and controlled by a sensor in combination with water injection system as disclosed above, which monitors the relative humidity at the evaporative cooler exit channel.

After a short distance from the nozzle exits, the droplets will begin drifting in a radial direction because of centrifugal forces induced by the rotating gas. The droplets will evaporate while entering the rotating gas and thereby cool the gas by using the heat of evaporation of the water droplets.

During the cooling of components that are in gaseous state in the inlet (Chlorine, potassium, sodium and maybe some organic components (tars) in the case of the thermal reactor being a gasifier) will form solid particles and be carried along with the gas in a dry state (salts or tar droplets / solid organics in the case of the thermal reactor being a gasifier).

The heavier salt particles and solid organics will be deposited at the bottom of the evaporative cooler and be removed. (Particle removal system is not shown in this figure)

The smaller particles (and tar droplets in the case of the thermal reactor being a gasifier) will follow the cooled dry gas from the evaporative cooler through the tangential exit channel 5.

Calculations for a 10 MW woodchips fuel input energy plant have been carried out and presented below:
The flue gas from the thermal reactor enters through the inlet channel of the evaporative cooler at a temperature of 900°C and a mass flow rate of 5,9 (kg/s).

At the exit channel of the evaporative cooler the temperature has decreased to 200°C being cooled by the evaporation of 2,1 (kg/s) water injected through the nozzle(s). Because of the evaporation of water, the dew point of the dry flue gas increases from 69°C to 83°C in the evaporative cooler having a diameter of 4-5 (m) and a height of 6,0 (m). The height is less than 50% as compared to a cooler, where the invention is not applied.

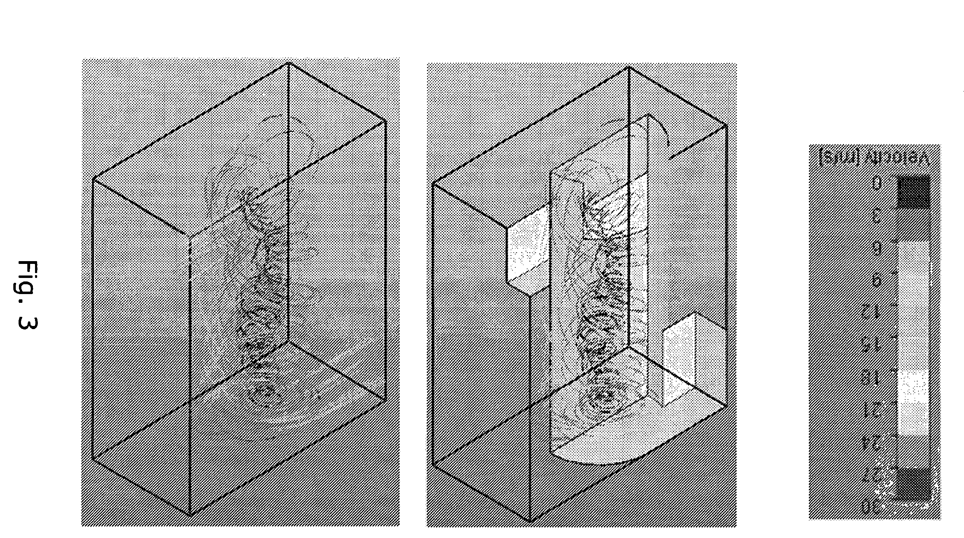

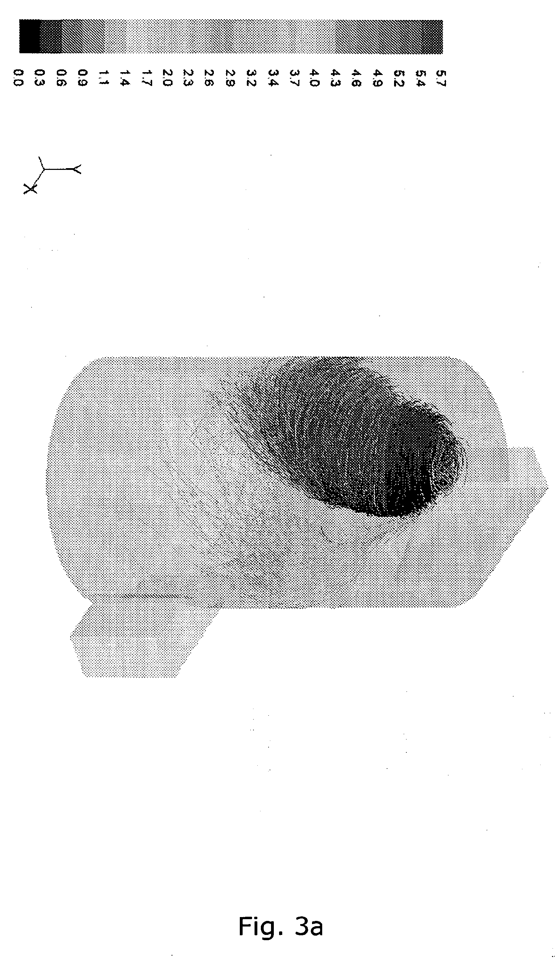

In Figure 3, a fluid dynamics calculation reproduces the anticipated flow pattern inside a typical design of the evaporative cooler at a gas inlet velocity of 10 m/s. This calculation is a "cold calculation" in the sense, that no droplet evaporation (and therefore no gas cooling) is considered. It is noticed, that the tangential velocity increases from the axis (1 to 3 m/s) and toward the wall (10 - 15 m/s).

Figure 3a, a fluid dynamic calculation of a evaporative cooler with an inlet flow rate of 16.000 Nm3 at a temperature of 600C, with a inlet gas velocity of 6 m/s is shown. The flue gas is after combustion of moist wood and therefore having 20% water vapours already at inlet. Only a single nozzle is used in the calculation: a FM 25 of Spraying Systems. This nozzle results in small droplets where the majority (by weight) is below 100µm. The water flow rate is 38 litres/minutes which then cool the gas to 300C. The scale beside the simulation shows the retention time in seconds. It is seen that the water droplets are fully evaporated in less than 4 seconds.

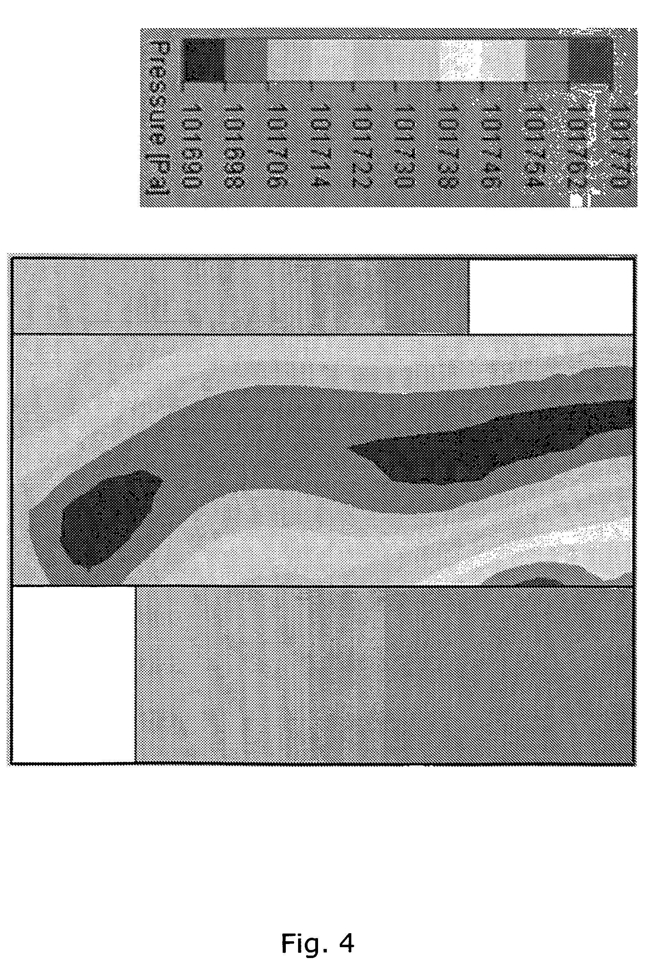

In Figure 4, the fluid dynamics calculation of Figure 3 is depicted with respect to the total pressure at the central plane of the evaporative cooler. It is noticed, that the total pressure decreases slightly from the evaporative cooler axis toward the wall. However, as noticed in Figure 3, the velocity (and therefore also the dynamic pressure) also increases in this direction and consequently, the static pressure will decrease from the axis toward the wall, which will result in the water droplets drifting in this direction into the hot gas layer.

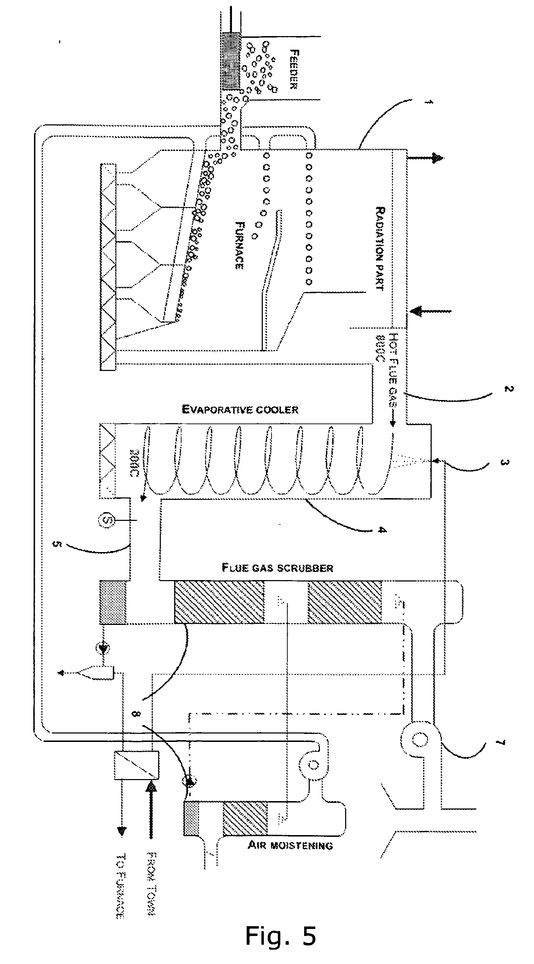

In Figure 5, the hot flue gases from a solid fuel combustion process are cooled and preliminary cleaned in the evaporative cooler according to the invention. The flue gas from the evaporative cooler exit channel is here applied in an energy plant with district heating scrubber system based heat recovery and preheating/moistening of combustion air for the base plant 8 as described in PCT international patent application WO 2007/036236 A1.

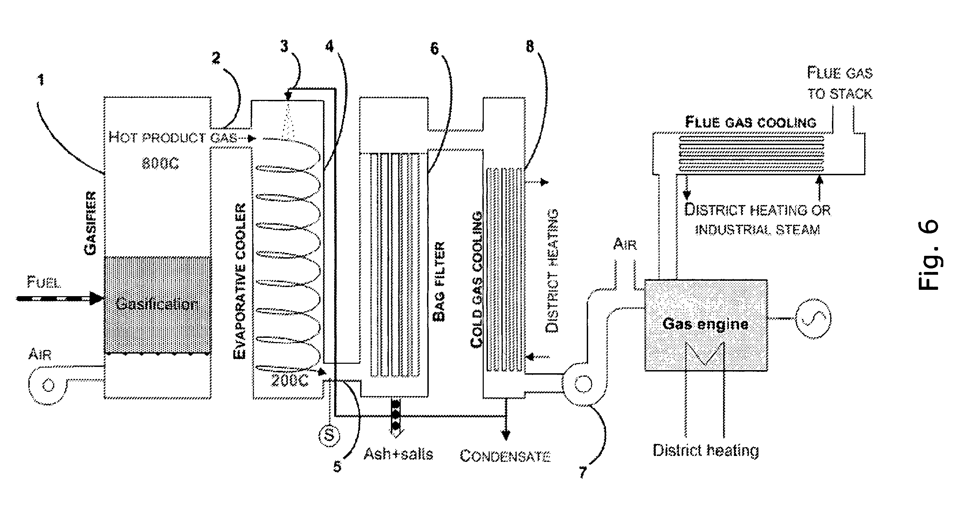

In Figure 6, the hot gases from a solid fuel gasification process 1 are cooled and preliminary cleaned in the evaporative cooler according to the invention. The gas from the evaporative cooler exit channel is let to a bag filter where particles are removed. The cleaned gas in further cooled and water vapours condensate in a condenser 8 and hereafter let to a gas engine which produce electricity, hot water and a hot flue gas.

## Claims

1. A method for cooling hot gases produced in a thermal reactor (1), said method comprising
- leading of the hot gas into a cylindrical evaporative cooler (4) in one or more tangential gas channel inlets (2) with such a velocity that to carry out a rotary movement in the cylindrical evaporative cooler (4), and
- injection of water in the hot gas at one or more injection zones (3), preferably by at least one nozzle arranged on top of the evaporative cooler, **characterised in that** the cooler has a height/diameter ratio less than 5 and the water is injected in such amount and droplet sizes that the water droplets will fully evaporate inside the evaporative cooler.

2. A method according to claim 1 for cooling hot gases produced in a thermal reactor (1), said method comprising subsequently, after injection of water in the hot gas at one or more injection zones (3) in such an amount and droplet sizes that the water droplets will fully evaporate inside the cooler, will the cooled gas leave the cooler through a gas channel (5) placed tangential on the cooler (4)

3. A method according to claims 1 or 2, wherein the injected water is atomised into fine droplets by use of high pressure water and/or use of pressurized air and/or other gases.

4. A method according to any of the claims 1 - 3, wherein the cooled gas subsequently passing through a condensing heat exchanger unit (8), where at least some of the content of water vapour is condensed.

5. A method according to any of the claims 1 - 4, wherein the water for the nozzle(s) (3) is tap water and/or process water and/or condensate developed elsewhere in the system

6. A method according to any of the claims 1 - 5, wherein particles are removed from the bottom of the evaporative cooler (4)

7. A method according to any of the claims 1 - 6, wherein impurities in the cooled gas from the evaporative cooler are removed using a cyclone, a bag house filter, an electrostatic filter or the like in a filter (6)

8. A method according to any of the claims 1 - 7, wherein a chemical agent is injected before and/or in and/or after the evaporative cooler (4) and before the filter (6) to improve the cleaning of the gas.

9. A method according to any of the claims 1 - 8, wherein the temperature inlet of the gas in the inlet duct (2) is between 300C-1500C and the outlet temperature of the gas in the exit duct (5) is between 100C-400C.

10. A method according to any of the claims 1 - 9, wherein the gas velocity in the inlet and/or the outlet exceed 5 m/s, such as 10 m/s.

## Patentansprüche

1. Verfahren zum Kühlen von heißen Gasen, die von einem thermischen Reaktor (1) erzeugt werden, wobei das Verfahren umfasst
- Leiten des heißen Gases in einem oder mehreren tangentialen Gaskanaleinlässen (2) mit einer derartigen Geschwindigkeit in einen zylindrischen Verdampfungskühler (4), dass eine Rotationsbewegung im zylindrischen Verdampfungskühler (4) ausgeführt wird, und
- Injizieren von Wasser an einer oder mehreren Injektionszonen (3) in das heiße Gas, vorzugsweise durch mindestens eine am oberen Ende des Verdampfungskühlers angeordnete Düse, **dadurch gekennzeichnet, dass** der Kühler ein Verhältnis von Höhe zu Durchmesser von weniger als 5 aufweist und dass das Wasser in einer Menge und mit einer solchen Tröpfchengröße injiziert wird, dass die Wassertröpfchen im Inneren des Verdampfungskühlers vollständig verdampfen.

2. Verfahren nach Anspruch 1 zum Kühlen von heißen Gasen, die von einem thermischen Reaktor (1) erzeugt werden, wobei das Verfahren nach dem Injizieren von Wasser an einer oder mehreren Injektionszonen (3) in das heiße Gas in einer Menge und mit einer solchen Tröpfchengröße, dass die Wassertröpfchen im Inneren des Verdampfungskühlers vollständig verdampfen, das Verlassen des gekühlten Gases durch einen tangential am Kühler (4) angeordneten Gaskanal (5) umfasst.

3. Verfahren nach Anspruch 1 oder 2, wobei das injizierte Wasser durch die Verwendung von Hochdruckwasser und/oder die Verwendung von unter Druck stehender Luft und/oder anderen Gasen zu kleinen Tröpfchen zerstäubt wird.

4. Verfahren nach einem der Ansprüche 1-3, wobei das gekühlte Gas anschließend durch eine Kondensationswärmetauschereinheit (8) strömt, wobei mindestens ein Teil des Gehalts an Wasserdampf kondensiert.

5. Verfahren nach einem der Ansprüche 1 - 4, wobei das Wasser für die Düse(n) (3) Leitungswasser und/oder Brauchwasser und/oder anderweitig im System gebildetes Kondensat ist.

6. Verfahren nach einem der Ansprüche 1 - 5, wobei Teilchen vom Boden des Verdampfungskühlers (4) entfernt werden.

7. Verfahren nach einem der Ansprüche 1 - 6, wobei Verunreinigungen in dem aus dem Verdampfungskühler austretenden gekühlten Gas mithilfe eines Zyklons, einem Schlauchfilter, einem elektrostatischen Filter oder dergleichen in einem Filter (6) entfernt werden.

8. Verfahren nach einem der Ansprüche 1 - 7, wobei ein chemisches Mittel vor und/oder in und/oder nach dem Verdampfungskühler (4) und vor dem Filter (6) injiziert wird, um die Reinigung des Gases zu verbessern.

9. Verfahren nach einem der Ansprüche 1 - 8, wobei die Eingangstemperatur des Gases im Einlasskanal (2) 300-1500 °C und die Ausgangstemperatur des Gases im Auslasskanal (5) 100-400 °C beträgt.

10. Verfahren nach einem der Ansprüche 1 - 9, wobei die Gasgeschwindigkeit im Einlass und/oder Auslass 5 m/s, wie 10 m/s, überschreitet.

## Revendications

1. Procédé de refroidissement de gaz chauds produits dans un réacteur thermique (1), ledit procédé comprenant
- transfert du gaz chaud dans un refroidisseur (4) à évaporation cylindrique par un ou plusieurs canaux d'entrée (2) de gaz tangentiels à une vitesse permettant d'obtenir un mouvement de rotation dans le refroidisseur (4) à évaporation cylindrique, et
- injection d'eau dans le gaz chaud par une ou plusieurs zones d'injection (3), de préférence par au moins une buse située au sommet du refroidisseur à évaporation, **caractérisé en ce que** le refroidisseur présente un rapport hauteur/diamètre inférieur à 5 et l'eau est injectée dans une quantité et avec une taille de gouttelettes telles que les gouttelettes d'eau s'évaporent totalement à l'intérieur du refroidisseur à évaporation.

2. Procédé selon la revendication 1 pour le refroidissement de gaz chauds produits dans un réacteur thermique (1), ledit procédé comprenant ensuite, après l'injection d'eau dans le gaz chaud par une ou plusieurs zones d'injection (3) dans une quantité et avec une taille de gouttelettes telles que les gouttelettes d'eau s'évaporent totalement à l'intérieur du refroidisseur, une étape durant laquelle le gaz refroidi sort du refroidisseur par un canal de gaz (5) disposé tangentiellement sur le refroidisseur (4).

3. Procédé selon les revendications 1 ou 2, dans lequel l'eau injectée est atomisée en fines gouttelettes en utilisant de l'eau sous haute pression et/ou en utilisant de l'air et/ou d'autres gaz sous pression.

4. Procédé selon l'une quelconque des revendications 1 à 3, dans lequel le gaz refroidi traverse ensuite un échangeur de chaleur à condensation (8), où au moins une partie de la vapeur d'eau qu'il contient est condensée.

5. Procédé selon l'une quelconque des revendications 1 à 4, dans lequel l'eau destinée à la(aux) buse(s) (3) est de l'eau du robinet et/ou de l'eau du procédé et/ou un condensat formé dans une autre partie du système.

6. Procédé selon l'une quelconque des revendications 1 à 5, dans lequel des particules sont éliminées du fond du refroidisseur (4) à évaporation.

7. Procédé selon l'une quelconque des revendications 1 à 6, dans lequel les impuretés du gaz refroidi provenant du refroidisseur à évaporation sont éliminées à l'aide d'un cyclone, d'un filtre à manches, d'un filtre électrostatique ou similaire dans un filtre (6).

8. Procédé selon l'une quelconque des revendications 1 à 7, dans lequel un agent chimique est injecté avant et/ou dans et/ou après le refroidisseur (4) à évaporation et avant le filtre (6) pour améliorer l'épuration du gaz.

9. Procédé selon l'une quelconque des revendications 1 à 8, dans lequel la température d'entrée du gaz dans la conduite d'entrée (2) se situe entre 300 °C et 1500 °C et la température de sortie du gaz dans la conduite de sortie (5) se situe entre 100 °C et 400 °C.

10. Procédé selon l'une quelconque des revendications 1 à 9, dans lequel la vitesse du gaz dans l'entrée et/ou la sortie est supérieure à 5 m/s, telle que 10 m/s.
